# EUROPEAN PATENT APPLICATION

(11) **EP 1 013 689 A1**
(43) Date of publication of application: **28.06.2000**
(21) Application number: 99310269.8
(22) Date of filing: 20.12.1999
(51) Int. Cl.: C08G 18/67, C08F 283/00

(54) **Improved polyurethane resins**

(30) Priority: 21.12.1998 NZ 33350398
(71) Applicant: Plexinate Limited, Glenfield, Auckland (NZ)
(72) Inventor: Timothy George Scott, Glenfield, Auckland (NZ); John Meadowcroft, Glenfield, Auckland (NZ)
(74) Representative: Phillips, Patricia Marie

(57) **Abstract**

An improved polyurethane derived resin of polymer (10) for casting, pultrusion and lamination purposes, particularly fibreglass lamination purposes. A method for production of the resin is also provided. The resin is produced from the reaction of an isocyanate compound with an hydroxylated acrylic, preferably hydroxypropyl methacrylate, and a polyol. Photoinitators may be included in the resin to allow effective curing under ultra violet light.

## Description

### Field of the Invention

This invention relates to polyurethane derived resins.

### Background to the Invention

Resins used for casting, pultrusion or lamination purposes, particularly fibreglass lamination purposes, can be divided into three main categories, being epoxys, vinylesters, and polyesters. Epoxy and vinylester mains generally provide the best performance, but they are expensive. There is a need for a resin which can be used in casting, pultrusion or lamination applications which Is less costly than epoxy resins but has performance characteristics which approach or exceed those of epoxy resins.

It is an object of the present invention to provide a polyurethane derived resin and/or method for resin production which goes at least some way toward overcoming the foregoing disadvantages, or which will at least provide the public with a useful choice.

### Summary of the Invention

In one aspect the invention consists in a polyurethane resin produced by the reaction of an isocyanate compound with an hydroxylated acrylic and a polyol.

The resin in a preferred form includes a vinyl functional reactive diluent being styrene.

The hydroxylated acrylic is preferably hydroxypropyl methacrylate, and the isocyanate preferably comprises toluene diisocyanate.

The polyol of the present invention preferably comprises trimethylol propane.

In a further aspect the invention consists in a method of producing a polyurethane resin, the method comprising the steps of
reacting an isocyanate compound with an hydroxylated acrylic to produce polymers, and
reacting the polymers with a polyol to provide cross-linking between the polymers.

The method preferably includes the step of dissolving the cross-linked polymer composition resulting from the initial steps in a vinyl functional reactive diluent, being styrene.

The method also preferably includes the step of adding methyl methacrylate to the polymers prior to adding the polyol.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

The invention consists in the foregoing and also envisages constructions of which the following gives examples only.

### Drawings

One preferred form of the invention will now be described with reference to the accompanying drawings in which:
Figure 1 is a graph of temperature against time for the reaction described in the description.
Figure 2 is a schematic diagrammatic representation of the idealised chemical structure of the polymer forming the basis of the resin referred to in the description.

### Detailed Description

The present invention provides polyurethane resins having improved characteristics, particularly in applications such as casting or fibreglass lamination.

It is well known that polyurethanes have many applications, but up until the present time, polyurethane derived resins have not been considered as having particularly useful properties for applications such as casting or lamination of fibreglass

It is well known that polyurethane resins are based on the reaction product of an organic isocyanate with compounds containing a hydroxyl group. For example, toluene diisocyanate may be added to a diol to produce polymers and cross-linking may be made possible by the use of polyols. However, in use the resins formed by such reactions have limited practical application because they are not easily cast or provided in a form for application to a laminate matrix such as fibreglass. Attempts to provide known polyurethane resins in an appropriate form for casting or lamination applications have been made by trying to dissolve the resin formed by the above known reaction in compounds such as styrene. Of known solvents styrene has the particular advantage that it is very cheap. However, we have found that polyurethane resins produced in accordance with a known reaction such as that outlined above are unstable in styrene.

We have found that the instability of polyurethane resins in styrene can be overcome by first reacting an isocyanate with a hydroxylated acrylic to form polymers before the step of cross-linking by reacting the polymers with a polyol.

The preferred hydroxylated acrylic used in the process according to the present invention is hydroxypropyl methacrylate (HPMA). This product is relatively safe to use and is not very expensive.

Another problem is providing the cured resin with a sufficiently high heat distortion temperature. We have found that the use of a trifunctional polyol (for example trimethylol propane) overcomes this problem due to the superior cross-linking that such a compound has over the difunctional polyol compounds that are usually used.

One example of a product and process in accordance with the present invention is set forth below.

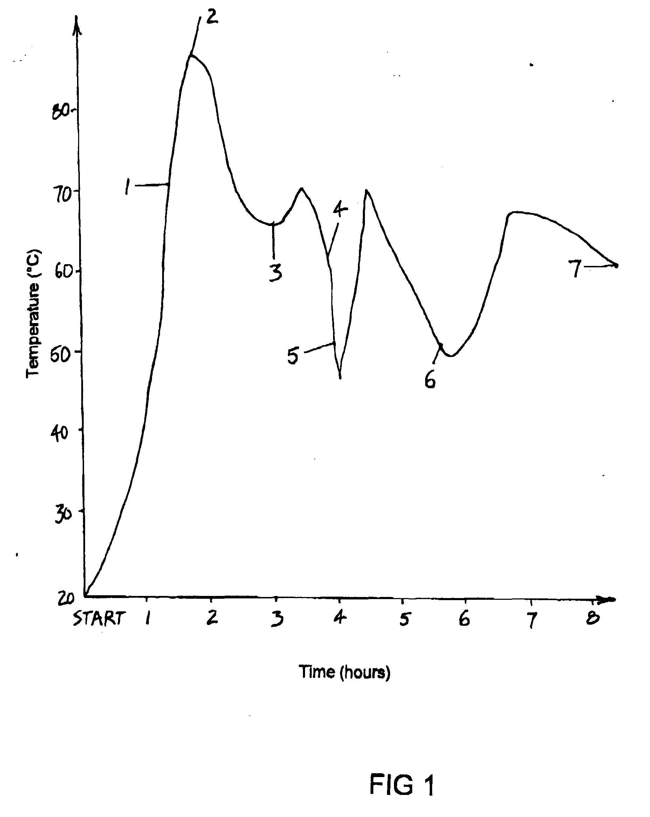

Referring to figure 1, the plot (1) shows the variation in temperature (in degrees Celsius) with time (in hours) for the production of the resin described in this example.

Initially, an isocyanate compound, preferably an isocyanate compound having two NCO groups, for example toluene diisocyanate (TDI), is mixed with almost all of the HPMA required to create the completed resin. At this time, a small quantity (150 parts per million of the finished formulation) of benzoquinone is added. This has the effect of inhibiting reaction between the HPMA and styrene which is added later in the process. We have found that benoquinone is a more suitable compound for this purpose than quinol or quinone which allow the composition to gel.

As discussed above, other hydoxylated acrcrylic compounds could be used, but the choice of HPMA provides the advantage of creating a polyurethane that is soluble in styrene and has the advantage that it is relatively sate to handle and store. The HPMA reacts with the more active isocyanate group on the toluene diisocyanate first. This initial reaction reaches a peak temperature at point (2) which is also about the point at which the reaction almost is complete. To ensure that the reaction is complete, a small quantity of a catalyst, dibutyl tin Dilaurate, (approximately 0.05% by weight of the finished formulation) is added at about point (3) in the graph. This catalyst also has the effect of increasing the rate of reaction of the polymers with TMP, which occurs later as described further below.

The next step is the addition of approximately one third by weight of the total quantity of styrene used to create the finished formulation. This is used to thin the polymer composition at this stage of the process and is added at point (4).

Shortly after the styrene is added, methyl methacrylate (MMA) is added at approximately point (5) on the graph together with or followed by approximately half the trimethylol propane (TMP), by weight, used in the final formulation. Addition of the MMA at this stage allows the addition of the TMP. TMP is a solid at room temperature, and has a melting point of approximately 58-60 °C. It is preferred that the temperature of the compounds undergoing reaction is kept relatively low, so MMA is added to allow the TMP to dissolve into the formulation without having to raise the temperature of the reaction above 58-60 °C. The temperature then rises again and falls.

The quantity of MMA which is added is in the vicinity of approximately 2.5%-5% of the finished product.

The remaining TMP is added at approximately point (6).

Finally, at approximately point (7), the remaining HPMA is added to ensure that all the isocyanate has been consumed in the reaction and to act as a solvent to further dilute and thin the formulation. We have found that the HPMA also assists in the stability of the finished formulation which we have found remains stable for days. The remaining styrene is added shortly thereafter to provide a resin which is in appropriate form for use, particularly for fibreglass lamination purposes. In use the resin is applied to a matting, for example fibreglass matting.

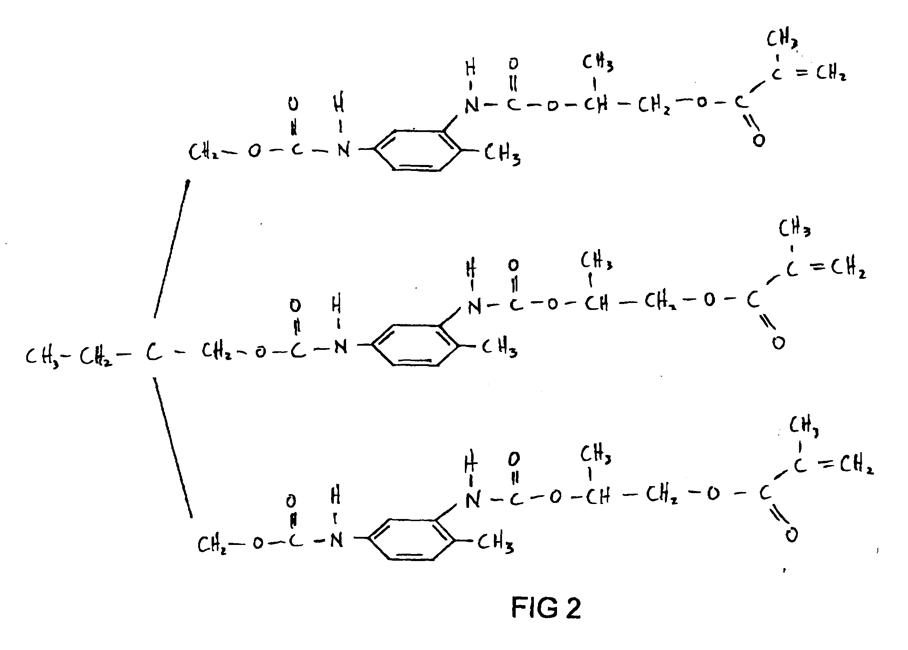

Referring to figure 2, a schematic diagrammatic representation, generally referenced (10), of the idealised chemical structure of the polymer comprising the resin made in accordance with the present example is shown.

The approximate proportion (by weight) of the main compounds used in the above example is as follows:
- TDI: 23.73%
- HPMA: 25.03%
- Styrene: 40.15%
- TMP: 6.09%
- MMA: 5.00%

Catalysts can be added to the composition to promote curing. Known catalysts include cobalt and MEKP. However, we have found that the resin in accordance with the present invention can be cured particularly effectively by the decomposition of photoinitiators under UV light. We have found this form of curing the resin to be particularly effective, primarily because a property of resins in accordance with the present invention is increased optical clarity over many other polymer resins. This optical clarity allows light of UV wavelength to penetrate the resin in use and thus effectively cure the resin. For resins in accordance with the present example, we have found that the resin can be effectively cured in sunlight within a matter of minutes.

Similarly, when the resin incorporating the photoinitiators is only subjected to normal artificial light in an environment that is substantially devoid of natural sunlight, we have found that curing can be effectively prevented. This provides great advantages in constructing objects, for example boat hulls or vehicle body parts, when using the resin for lamination purposes such as fibreglass lamination purposes.

It will be seen that the process described above has the advantages of being very short compared with processes for producing other mains, and being relatively simple. Also, the ingredients are relatively inexpensive.

We have found that the resin disclosed in the present example has excellent compatibility with most conventional fibres. It has:
High Tensile Strength
High Flexural Strength
Outstanding Chemical Resistance
High Heat Deflection Temperature
High Reactivity - Little Need for Post Cure
Low Shrinkage on Curing
Conventional M.E.K.P. Cure or High Speed Light Cure

### Physical Properties of Unfilled Castings

- Tensile Strength: 87.0 Mpa
- Flexural Strength: 130.7 Mpa
- Tensile Modulus: 3.9 Gpa
- Flexural Modulus: 3.8 Gpa
- Heat Deflection Temperature: 135.0 °C
- Elongation At Break: 3.5%
- Barcol Hardness: 42-44
- Specific Gravity: 1.1

### Liquid Resin Properties

- Polyurethane Polymer Content: 50-55%
- Styrene Content: 42-43%
- Methyl Methacrylate: 2-3%
- Viscosity at 25 °C (Brookfield LVF 2/60): 200-350 cP
- Specific Gravity: 1.043
- Colour: Straw Yellow
- Isocyanate Content: 0%
- Clean-up: Acetone

## Claims

1. A polyurethane resin produced by the reaction of an Isocyanate compound with an hydroxylated acrylic and a polyol.

2. A polyurethane resin as claimed in claim 1 including a vinyl functional reactive diluent.

3. A polyurethane resin as claimed in claim 2 wherein the vinyl functional reactive diluent comprises styrene.

4. A polyurethane resin as claimed in claim 1 wherein the hydroxylated acrylic comprises hydroxypropyl methacrylate.

5. A method of producing a polyurethane resin, the method comprising the steps of
reacting an isocyanate compound with an hydroxylated acrylic (2) to produce polymers (10), and
reacting the polymers (10) with a polyol (6) to provide cross-linking between the polymers.

6. A method as claimed in claim 5 including the step of dissolving the cross-linked polymer composition in a vinyl functional reactive diluent (4).

7. A method as claimed in claim 6 wherein the vinyl functional reactive diluent comprises styrene.

8. A method as claimed in claim 5 wherein the hydroxylated acrylic comprises hydroxypropyl methacrylate.

9. A method as claimed in claim 5 including the step of adding methyl methacrylate to the polymers prior to adding the polyol.

10. Any novel feature or combination of features disclosed herein.
